# EUROPÄISCHE PATENTANMELDUNG

(11) **EP 4 534 373 A1**
(43) Veröffentlichungstag der Anmeldung: **09.04.2025**
(21) Anmeldenummer: 24203434.6
(22) Anmeldetag: 30.09.2024
(51) Int. Cl.: B60W 50/00, B60W 60/00

(54) **VERFAHREN ZUM BEREITSTELLEN EINER BETRIEBSRAHMENVORGABE FÜR EIN AUTONOMES FAHRZEUG, COMPUTERPROGRAMM UND DATENTRÄGER**

(30) Priorität: 05.10.2023 DE 102023209736
(71) Anmelder: Siemens Aktiengesellschaft, 80333 München (DE)
(72) Erfinder: Klein, Cornel, 82041 Oberhaching (DE); Rothbauer, Stefan, 86156 Augsburg (DE); Sainz López, Andoni, 90762 Fürth (DE); Sauer, Horst, 80689 München (DE); Schmid, Reiner, 80538 München (DE); Schuster, Tobias, 85221 Dachau (DE); Schönhaar, Hannes, 81541 München (DE); Zeller, Marc, 81243 München (DE)
(74) Vertreter: Siemens Patent Attorneys

(57) **Zusammenfassung**

Die Erfindung betrifft ein Verfahren zum Bereitstellen einer Betriebsrahmenvorgabe (BV) für ein autonomes Fahrzeug mit den Schritten:
Bereitstellen eines Grundmodells (GM), welches Attributwerte (a) aufweist, welche zumindest eine Umgebung (SZ), Umweltdaten (DU) und ein dynamisches Element (DE) umfassen und die Betriebsrahmenvorgabe (BV) charakterisieren (S1); Hinzufügen von wenigstens einem weiteren Attributwert (a') zu dem Grundmodell (GM) aus einem Ergänzungsdatensatz, welcher eine Ausnahmesituation für einen Fahrzeugtyp des Fahrzeugs beschreibt (S2); Ableiten wenigstens eines Punktwerts für den wenigstens einen weiteren Attributwert (a') und/oder für wenigstens einen der Attributwerte (a) anhand einer Häufigkeit und/oder Signifikanz in dem Ergänzungsdatensatz (S3); und Bereitstellen einer anhand des wenigstens einen Punktwerts angepassten Betriebsrahmenvorgabe (ABV) (S4). Ferner betrifft die Erfindung ein Computerprogramm und einen Datenträger.

## Beschreibung

Unabhängig vom grammatikalischen Geschlecht eines bestimmten Begriffes sind Personen mit männlicher, weiblicher oder anderer Geschlechteridentität mit umfasst.

Die Erfindung betrifft ein Verfahren zum Bereitstellen einer Betriebsrahmenvorgabe für ein autonomes Fahrzeug, welches insbesondere als Lok oder Zug ausgebildet ist, gemäß dem Patentanspruch 1. Ferner betrifft die Erfindung ein Computerprogramm sowie einen elektronisch lesbaren Datenträger gemäß den Patentansprüchen 10 und 11.

Autonome Systeme, insbesondere Fahrzeuge, sollen innerhalb eines für sie definierten Systemkontext, der sogenannten Betriebsdomäne beziehungsweise im Englischen Operational Domain (OD) autonom getrieben werden beziehungsweise operieren. So ist beispielsweise das autonome Fahren für bestimmte Streckenabschnitte angedacht. Handelt es sich bei dem autonomen Fahrzeug beispielsweise um ein fahrerloses Transportsystem, kann ein bestimmter Bereich in einer Fabrik für den autonomen Betrieb angedacht sein. Um die vorgesehene Betriebsdomäne beziehungsweise den Betriebsrahmen dem Fahrzeug bereitstellen zu können beziehungsweise für das Fahrzeug zu beschreiben, wird eine Betriebsrahmenvorgabe (Englisch: Operational Design Domain (ODD)), welche ein Repräsentationsmodell der realen Welt beziehungsweise der OD spezifiziert, entwickelt.

Die ODD umfasst in der Regel verschiedene Teile, wie eine Szenerie, Umgebungsbedingungen und dynamische Elemente. Da die OD beziehungsweise der Betriebsrahmen oder Betriebsdomäne in der Regel komplex ist, müssen Ingenieure von der realen Welt abstrahieren, aber dabei gleichzeitig die ODD beziehungsweise Betriebsrahmenvorgabe so genau wie möglich beschreiben, da sie unter anderem die Grundlagen für eine Qualitätssicherung und das Testen des autonomen Fahrzeugs vorgibt.

Die manuelle Definition der ODD beziehungsweise ihrer Attribute ist mühsam, da nicht klar ist, welche Attribute welche Relevanz haben und wie eine Abstraktionsebene auszusehen hat.

Aufgabe der vorliegenden Erfindung ist es daher, ein Verfahren, ein Computerprogramm sowie einen Datenträger bereitzustellen, durch welche eine Betriebsrahmenvorgabe für ein autonomes Fahrzeug möglichst automatisiert erstellt werden kann und insbesondere eine Gewichtung von Attributen automatisch erfolgt.

Diese Aufgabe wird erfindungsgemäß durch ein Verfahren, ein Computerprogramm sowie einen elektronisch lesbaren Datenträger der unabhängigen Patentansprüche gelöst. Vorteilhafte Ausgestaltungen und Weiterbildungen sind in den abhängigen Patentansprüchen, der Beschreibung sowie in der Zeichnung gezeigt.

Ein erster Aspekt betrifft ein Verfahren zum Bereitstellen einer Betriebsrahmenvorgabe beziehungsweise einer Operational Design Domain (ODD), für ein autonomes Fahrzeug, insbesondere ein Schienenfahrzeug, wie beispielsweise einen Zug. Das erfindungsgemäße Verfahren umfasst dabei die folgenden Schritte:
In einem ersten Schritt erfolgt ein Bereitstellen eines Grundmodells, welches Attributwerte aufweist, welche zumindest eine Umgebung beziehungsweise Szene, Umweltdaten und wenigstens ein dynamisches Element, wie beispielsweise Personen in der Umgebung beziehungsweise Szene, umfassen und die Betriebsrahmenvorgabe charakterisieren.

In einem zweiten Schritt erfolgt ein Hinzufügen von wenigstens einem weiteren Attributwert zu dem Grundmodell aus einem Ergänzungsdatensatz, welcher eine Ausnahmesituation, wie beispielsweise einen Unfall, für einen Fahrzeugtyp, also beispielsweise Schienenfahrzeug, des Fahrzeugs beschreibt.

In einem dritten Schritt erfolgt ein Ableiten wenigstens eines Punktwerts für den wenigstens einen weiteren Attributwert und/oder für wenigstens einen der Attributwerte anhand einer Häufigkeit und/oder Signifikanz in dem Ergänzungsdatensatz.

In einem vierten Schritt erfolgt nun ein Bereitstellen einer anhand des wenigstens einen Punktwerts angepassten Betriebsrahmenvorgabe, welche somit aus dem bereitgestellten Grundmodell, welches die Betriebsrahmenvorgabe zumindest teilweise charakterisiert hat, abgeleitet worden ist.

Mit anderen Worten würden im ersten Schritt des Verfahrens eine erste beziehungsweise vorläufige Version des Betriebsrahmens beziehungsweise der ODD als Grundmodell bereitgestellt, welche beispielsweise auf klassische Weise von Experten, wie im Stand der Technik üblich, erstellt worden ist. Dabei wird ein Satz A von Attributen beziehungsweise Attributwerten a definiert, welche die Umgebung, Umweltdaten und dynamische Elemente beschreiben. Beispielsweise kann die Umgebung anhand ihrer Struktur, beispielsweise Wald oder Wiese, und/oder der Art der Schienen beschrieben werden. Die Umweltdaten geben beispielsweise Wetterbedingungen und Lichtverhältnisse vor, innerhalb derer das autonome Fahrzeug betrieben werden soll. Dynamische Elemente umfassen beispielsweise Personen, mit welchen in der Umgebung zu rechnen ist und die somit auf die Schienen treten können.

Im zweiten Schritt werden nun aus Ergänzungsdaten, welche beispielsweise im Fall der Eisenbahn von der Eisenbahnagentur der Europäischen Union (ERA), bereitgestellt werden. Insbesondere kann es sich bei der Ausnahmesituation um einen Unfall handeln. Eisenbahnunfälle werden von der Eisenbahnagentur erfasst, sodass relevante Attribute für die ODD des autonomen Systems beziehungsweise des autonomen Fahrzeugs auf Grundlage vorhandener Informationen über Eisenbahnunfälle abgeleitet werden können. So wird im zweiten Schritt des Verfahrens insbesondere die Menge A der Attribute erweitert durch neue Attribute beziehungsweise Attributwerte a` zu A' verfeinert.

Eisenbahnunfalldaten enthalten beispielsweise Informationen über den genauen Ort, an dem sich der Unfall ereignet hat, das genaue Datum und die Uhrzeit des Unfalls, sodass mit diesen Informationen beispielsweise auch exakte Wetterdaten für den Zeitpunkt des Unfalls abgerufen werden können, entweder von den Ergänzungsdaten selbst oder anhand der dort enthaltenen Information von einer Wetterdatenbank beziehungsweise einem Wetterdienst. Informationen über besondere Bedingungen, wie beispielsweise Bauarbeiten, und Informationen über die Schwere des Unfalls können somit ebenfalls in dem Ergänzungsdatensatz enthalten sein und als das wenigstens eine weitere Attribut beziehungsweise der wenigstens einen weiteren Attributwert a` dem Grundmodell hinzugefügt werden beziehungsweise das Grundmodell somit erweitert werden.

Auf der Grundlage der Informationen des Ergänzungsdatensatzes können Attribute über die Szenerie, beispielsweise Gleise, feste Infrastruktur, wie Signale, Gebäude usw. entlang der Gleise, die Umgebungsbedingungen, beispielsweise Wetterbedingungen, wie Regen, Nebel, Schnee, Lichtverhältnisse und dergleichen, und die an den Unfällen beteiligten dynamischen Elemente, wie beispielsweise Erwachsene, Bauarbeiter, Kinder, Tiere usw. abgeleitet werden. Daraus ergibt sich die verfeinerte Menge A` von Attributen für die ODD.

Um nun relevante Attribute, insbesondere Unfallinformationen, für das Bereitstellen einer Betriebsrahmenvorgabe zu finden beziehungsweise zu charakterisieren, sollten die verfügbaren Informationen nach bestimmten Parametern, wie der Geolokation und/oder der geplanten ODD und/oder anhand bestimmter Parameter, die in den Systemanforderungen definiert sind, beispielsweise ob ein führerloser Zug nachts fahren soll oder nicht, abgerufen werden.

Zu dem Ergänzungsdatensatz können weitere Quellen, wie beispielsweise historische Informationen über den Tag des Unfalls gesammelt werden, solche zusätzlichen Quellen können beispielsweise auch offizielle Analysen des Unfalls umfassen. Vorteilhaferweise sollten diese Quellen in computerlesbarer Form vorliegen, damit sie beispielsweise von einem Steuergerät beziehungsweise einer elektronischen Recheneinrichtung, welche das Verfahren zumindest teilweise durchführt, auf einfache Weise verarbeitet werden können, beispielsweise mittels einer geeigneten Sprachanalyse.

Im dritten Schritt wird auf der Grundlage des Ergänzungsdatensatzes, also der in den Eisenbahnunfalldaten verfügbaren Informationen jedem Attribut der Menge A', also insbesondere dem wenigstens einen weiteren Attributwert a` beziehungsweise wenigstens einem der Attributwerte a des Grundmodells eine Punktzahl zugeordnet beziehungsweise wird das Attribut mit einer Punktzahl versehen. Diese Punktzahl hangt von der Anzahl beziehungsweise Häufigkeit der Ausnahmesituationen, beispielsweise von der Anzahl der Unfälle, ab, in deren Zusammenhang das entsprechende Attribut beziehungsweise der entsprechende Attributwert erwähnt wird. Zusätzlich oder alternativ wird entsprechend die Schwere beziehungsweise die Signifikanz in dem Datensatz gewichtet. Diese Punktzahl beziehungsweise der Punktwert kann somit beispielsweise als Risiko dafür interpretiert werden, dass ein Attributwert beziehungsweise der wenigstens eine weitere Attributwert zu einem Unfall oder der Ausnahmesituation führen könnte. Dabei sind Häufigkeit und Schwere Informationen, welche aus dem Ergänzungsdatensatz extrahiert oder abgeleitet werden können.

So kann es sich ergeben, dass aufgrund des Bereitstellens der Betriebsrahmenvorgabe im vierten Schritt entsprechende Attribute beziehungsweise Attributwerte beziehungsweise der wenigstens einen weiteren Attributwert mit einer besonders hohen Punktzahl beziehungsweise einem hohen Punktwert besonders berücksichtigt werden sollen, um beispielsweise Testszenarien aus der Betriebsrahmenvorgabe oder ODD abzuleiten.

Die Genauigkeit der Punktzahl beziehungsweise des Punktwerts oder Scores könnte durch eine Schätzung der aktuellen Häufigkeit eines Ereignisses verbessert werden, indem beispielsweise eine Trendanalyse für die Daten der Unfallereignisse im Laufe der Jahre durchgeführt wird. Darüber hinaus kann, wenn bekannt ist, dass eine bestimmte Klasse von Ereignissen in Unfallberichten unterrepräsentiert ist, da diese Klasse beispielsweise nicht meldepflichtig ist, und somit nur ein gewisser Prozentsatz der tatsächlichen Ereignisse dieser Art gemeldet werden, dies mittels einer entsprechenden Ergänzung zum Ermitteln des wenigstens einen Punktwerts herangezogen werden.

Durch das erfindungsgemäße Verfahren ergibt sich der Vorteil, dass eine automatische oder zumindest halbautomatische Erstellung der Betriebsrahmenvorgabe oder ODD insbesondere für den Eisenbahnbereich, zumindest für bestimmte Streckenabschnitte, welche relevante Attribute enthalten, möglich ist. Darüber hinaus erfolgt kann eine Quantifizierung der Bedeutung der ODD-Attribute beziehungsweise Attributwerte auf Grundlage von meldepflichtigen Informationen über Unfälle erfolgen.

Das vorgestellte Verfahren wird gegenüber konventionell erstellten ODDs zu besseren Ergebnissen führen, da insbesondere vollständigere Modelle der Attribute beziehungsweise Attributmenge verwendet werden. Das Verfahren stellt ferner eine Hilfe bei der Ableitung von Testfällen auf der Grundlage von wichtigen Einflussfaktoren, für entsprechende Ausnahmesituationen beziehungsweise Unfälle vor. Je höher die Risikobewertung beziehungsweise der Punktwert eines Attributes, desto mehr Testfälle können durchgeführt werden beziehungsweise sind entsprechend ableitbar. Ferner kann auf der Grundlage für den Fall, dass es sich bei dem Ergänzungsdatensatz um Unfalluntersuchungsdaten handelt, die Betriebsrahmenvorgabe oder ODD von automatisierten Fahrsystemen beziehungsweise Fahrerassistenzsystemen des autonomen Fahrzeugs kontinuierlich angepasst und verbessert werden.

Außerdem kann das Verfahren besonders flexibel eingesetzt werden, beispielsweise bei fahrerlosen Transportsystemen, Eisenbahnverkehr, aber auch für Automobile und Luftfahrzeugen.

In vorteilhafter Ausgestaltung der Erfindung erfolgt ein Abrufen des Ergänzungsdatensatzes über eine Schnittstelle, welche beispielsweise von einer Kommunikationseinrichtung bereitgestellt werden kann, von einer zentralen elektronischen Recheneinrichtung, welche insbesondere als Registerdatenbank oder Unfallregister, ausgebildet ist. Mit anderen Worten weist das System, welches das Verfahren durchführt, beispielsweise die elektronische Recheneinrichtung, zumindest eine Schnittstelle beziehungsweise ein Interface auf, welches beispielsweise von einer Kommunikationseinrichtung, wie beispielsweise einem Modem, gebildet werden kann, über welches der Ergänzungsdatensatz abgerufen und somit beispielsweise in einem Speicherbereich erfasst werden kann. Dabei kann die zentrale elektronische Recheneinrichtung, welche somit den Ergänzungsdatensatz bereitstellt, beispielsweise einen Server, welcher mit einem Kommunikationsnetz, wie dem Internet verbunden ist, und selbst über eine Schnittstelle beziehungsweise eine Kommunikationseinrichtung verfügt, darstellen. Dadurch ergibt sich der Vorteil, dass das Verfahren beispielsweise auf besonders aktuelle, von entsprechenden Stellen bereitgestellte Ergänzungsdatensätze zugreifen kann, sodass beispielsweise ein entsprechendes Fahrerassistenzsystem des autonomen Fahrzeugs besonders einfach aktualisiert werden kann.

In weiterer vorteilhafter Ausgestaltung der Erfindung erfolgt das Ableiten des wenigstens einen Punktwerts zusätzlich anhand eines Zeitwerts. Der Zeitwert kann insbesondere einen Zeitstrahl charakterisieren und somit die Ergebnisse anhand des Zurückliegens in der Vergangenheit beurteilen. So kann es sich beispielsweise ergeben, dass Unfallereignisse, welche jeweils einen bestimmten Attributwert aufweisen, im Laufe der Jahre seltener werden beziehungsweise weniger relevant werden, da beispielsweise bessere oder andere Schutzmechanismen oder ein Umbau oder Ausbau der entsprechenden Infrastruktur stattgefunden hat. Daraufhin können der Punktwert und somit die Gewichtung des zugehörigen Attributwerts angepasst werden beziehungsweise vorteilhaft berücksichtigt werden. Dadurch ergibt sich der Vorteil, dass die Betriebsrahmenvorgabe besonders präzise erstellt werden kann.

In weiterer vorteilhafter Ausgestaltung der Erfindung erfolgt für das Ableiten anhand der Signifikanz eine Klassifikation für die Ausnahmesituation. Mit anderen Worten wird ermittelt, wie gewöhnlich oder extrem die Ausnahmesituation ist. Handelt es sich bei der Ausnahmesituation beispielsweise um einen Unfall, kann die Schwere des Unfalls klassifiziert werden. Sind bei dem Unfall beispielsweise Personen beteiligt, kann die Klassifikation anhand der Schwere der Personenschäden erfolgen. So kann die Klassifikation beispielsweise die Klassen leicht verletzt, schwer verletzt, lebensbedrohlich verletzt und mit Todesfolge umfassen. Dadurch ergibt sich der Vorteil, dass für das Verfahren besonders vorteilhaft Attributwerte mit zugehörigen Punktwerten versehen werden können, welche die für beteiligte Personen besonders vorteilhaften Testszenarios bereitstellen, um somit in Zukunft bei autonomen Fahrzeugen einen besonders sicheren Betrieb zu ermöglichen.

In weiterer vorteilhafter Ausgestaltung der Erfindung wird für ein Extrahieren des wenigstens einen weiteren Attributwerts und/oder zum Ableiten, und somit insbesondere zum Bestimmen der Signifikanz, des wenigstens einen Punktwerts, für den zugehörigen Attributwert beziehungsweise wenigstens einen weiteren Attributwert eine Methode des maschinellen Lernens verwendet. Mit anderen Worten wird das Ableiten des Punktwerts oder das Extrahieren des wenigstens einen weiteren Attributwerts mittels beziehungsweise mit Hilfe von künstlicher Intelligenz, wie beispielsweise einem selbstlernenden Algorithmus, durchgeführt. Bei einem selbstlernenden Algorithmus beziehungsweise der Methode des maschinellen Lernens kann es sich insbesondere um ein Large Language-Modell (LLM) oder um ein generatives adversarial Netzwerk (GAN) beziehungsweise ein erzeugendes generisches Netzwerk handeln, welches einen Algorithmus für unüberwachtes Lernen darstellt. Beispielsweise ist ein Vorteil des GANs, dass nur eine geringe Menge an Trainingsdaten beziehungsweise eine generell geringe Menge an Daten zur Verfügung gestellt werden braucht, wodurch Daten verwendet werden können, zu denen beispielsweise keine Zielwerte existieren. So ist es beispielsweise mittels unüberwachtem Lernen möglich, neue Strukturen aus Daten abzuleiten, was bei der Attributierung beziehungsweise dem Ermitteln der weiteren Attributwerte beziehungsweise relevante Attributwerte vorteilhaft sein kann.

In weiterer vorteilhafter Ausgestaltung der Erfindung spezifiziert und/oder ergänzt der wenigstens eine weitere Attributwert die Umgebung, die Umweltdaten und/oder die dynamischen Elemente. Mit anderen Worten wenigstens einer der drei Pfeiler des Grundmodells: Umgebung, Umweltdaten und dynamische Elemente, ergänzt. So können beispielsweise die dynamischen Elemente im Grundmodell nur Fahrgäste umfasst haben, und diese nun um Bauarbeiter ergänzt werden. Umweltdaten können beispielsweise Wetterdaten spezifizieren, sodass, falls bisher nur Schönwetterdaten vorliegen, nun auch Regenereignisse erfasst werden können. Dadurch ergibt sich der Vorteil, dass die Betriebsrahmenvorgabe besonders vorteilhaft angepasst werden kann, sodass für das autonome Fahrzeug beispielsweise genaue Betriebsbedingungen festgelegt werden können.

In weiterer vorteilhafter Ausgestaltung der Erfindung erfolgt das Vorgeben eines Testszenarios für das Fahrzeug anhand der angepassten Betriebsrahmenvorgabe und/oder es erfolgt ein Betreiben des Fahrzeugs anhand der angepassten Betriebsrahmenvorgabe und/oder in dem Testszenario. Mit anderen Worten wird anhand der durch das Verfahren bereitgestellten angepassten Betriebsrahmenvorgabe ein Testszenario für einen Betrieb - insbesondere Testbetrieb - des autonomen Fahrzeuge ermittelt, in welchem beispielsweise das Fahrzeug getestet werden kann, um somit das das Fahrzeug autonom betreibende Fahrerassistenzsystem anzupassen. Dadurch ergibt sich der Vorteil, dass aufgrund des Verfahrens das autonome Fahrzeug besonders vorteilhaft betrieben werden kann.

In weiterer vorteilhafter Ausgestaltung des Verfahrens wird als der Ergänzungsdatensatz eine Unfallstatistik betreffend den Fahrzeugtyp des Fahrzeugs verwendet, und der wenigstens eine weitere Attributwert charakterisiert als Ausnahmesituation einen Unfall. Mit anderen Worten wird, wie bereits erwähnt, ein Ergänzungsdatensatz verwendet, welcher als Ausnahmesituation einen Unfall beschreibt, wobei insbesondere auf eine Unfallstatistik zurückgegriffen werden kann, welche gut gepflegt und umfangreich ist, wie sie beispielsweise für Personenkraftwägen von Versicherungen gepflegt wird, sodass beispielsweise die Häufigkeit, aber auch die Signifikanz für die jeweiligen Attributwerte besonders präzise ermittelt werden kann. So können besonders vorteilhaft Rahmenbedingungen, in welchen das autonome Fahrzeug möglichst unfallfrei betrieben werden kann beziehungsweise unfallfrei zu betreiben ist, abgeleitet werden.

In weiterer vorteilhafter Ausgestaltung der Erfindung ist der Fahrzeugtyp des autonomen Fahrzeugs, ein Zug beziehungsweise insbesondere eine Lokomotive, ein fahrerloses Transportfahrzeug, insbesondere für ein fahrerloses Transportsystem, beispielsweise in einer Fertigung, ein Kraftfahrzeug, insbesondere ein Personenkraftwagen, oder ein Luftfahrzeug, insbesondere ein Flugzeug. Mit anderen Worten kann das Verfahren zumindest beim Vorhandensein eines verlässlichen Ergänzungsdatensatzes quasi ein Fahrzeug eines beliebigen Fahrzeugtyps darstellen. Dadurch ergibt sich der Vorteil, dass das Verfahren besonders flexibel und somit vorteilhaft für eine große Bandbreite an Fahrzeugen und somit Verkehrsbereiche angewandt werden kann.

Ein zweiter Aspekt der Erfindung umfasst ein Computerprogramm. Das Computerprogramm kann beispielsweise in einem Speicher einer elektronischen Recheneinrichtung, welche zumindest einen Teil des Verfahrens durchführt, geladen werden und umfasst Programmmittel, um die Schritte des Verfahrens auszuführen, wenn das Computerprogramm in der elektronischen Recheneinrichtung beziehungsweise einer Steuerungseinrichtung ausgeführt wird.

Dabei sind Vorteile und vorteilhafte Ausgestaltungen des ersten Aspekts der Erfindung als Vorteile und vorteilhafte Ausgestaltungen des zweiten Aspekts der Erfindung anzusehen und umgekehrt.

Ein dritter Aspekt der Erfindung betrifft einen elektronisch lesbaren Datenträger. Der elektronisch lesbare Datenträger umfasst darauf gespeicherte elektronisch lesbare Steuerinformationen, die zumindest ein Computerprogramm wie soeben vorgestellt umfassen und derart ausgestaltet sind, dass sie bei der Verwendung des Datenträgers in einer elektronischen Recheneinrichtung ein hier vorgestelltes Verfahren gemäß dem ersten Aspekt der Erfindung ausführen können.

Dabei sind Vorteile und vorteilhafte Ausgestaltungen des dritten Aspekts der Erfindung als Vorteile und vorteilhafte Ausgestaltungen sowohl des zweiten als auch des ersten Aspekts der Erfindung anzusehen und jeweils umgekehrt.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Es zeigt:
- FIG 1: ein schematisches Ablaufdiagramm für ein Verfahren zum Bereitstellen einer Betriebsrahmenvorgabe für ein autonomes Fahrzeug;
- FIG 2: eine schematische Darstellung eines Grundmodells der Betriebsrahmenvorgabe; und
- FIG 3: eine schematische Darstellung einer anhand des Verfahrens angepassten Betriebsrahmenvorgabe.

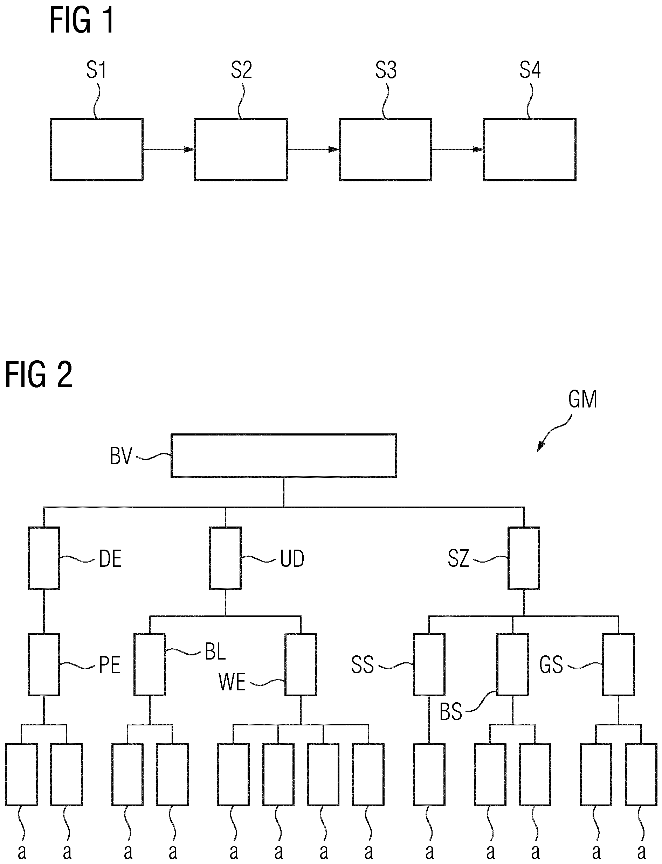

FIG 1 zeigt ein schematisches Ablaufdiagramm für ein Verfahren zum Bereitstellen einer Betriebsrahmenvorgabe BV oder im Englischen Operational Design Domain (ODD), für ein autonomes Fahrzeug beziehungsweise ein Fahrzeug, welches zumindest teilweise autonom beispielsweise mittels eines Fahrerassistenzsystems betrieben werden kann. Dabei kann es sich bei dem Fahrzeug insbesondere im gezeigten Ausführungsbeispiel um ein Schienenfahrzeug beziehungsweise eine Eisenbahn handeln.

Das vorgestellte Verfahren umfasst Schritte S1 bis S4:
Im ersten Schritt S1 erfolgt ein Bereitstellen eines in FIG 2 gezeigten Grundmodells GM, welches Attributwerte a aufweist, welche zumindest eine Umgebung SZ, Umweltdaten UD und wenigstens ein dynamisches Element DE umfassen und die Betriebsrahmenvorgabe BV oder ODD charakterisieren beziehungsweise zumindest teilweise beschreiben.

Im zweiten Schritt S2 erfolgt ein Hinzufügen von wenigstens einem weiteren Attributwert a' zu dem Grundmodell GM, aus einem Ergänzungsdatensatz, welcher eine Ausnahmesituation, wie beispielsweise einen Unfall, für den Fahrzeugtyp des Fahrzeugs beschreibt.

Im dritten Schritt S3 erfolgt ein Ableiten wenigstens eines Punktwerts für den wenigstens einen weiteren Attributwert a` und/oder für wenigstens einen der Attributwerte a anhand einer Häufigkeit und/oder Signifikanz in dem Ergänzungsdatensatz.

Schließlich erfolgt im vierten Schritt S4 ein Bereitstellen einer anhand der wenigstens einen Punktwerts angepassten Betriebsrahmenvorgabe ABV beziehungsweise ODD.

Anhand des vorgestellten Verfahrens soll ein Computerprogramm vorgestellt werden, welches Programmmittel umfasst, die dazu geeignet sind, die Schritte S1 bis S4 des Verfahrens beispielsweise in einer elektronischen Recheneinrichtung auszuführen. Zusätzlich soll ferner ein elektronisch lesbarer Datenträger vorgestellt werden, welcher beim Einlesen in die elektronische Recheneinrichtung entsprechende Programmmittel bereitstellen kann.

Im vorliegenden Fall soll es sich bei dem Fahrzeugtyp des autonomen Fahrzeugs um einen Zug beziehungsweise eine Eisenbahn handeln. Alternativ könnte der Fahrzeugtyp des autonomen Fahrzeugs ein fahrerloses Transportfahrzeug für ein fahrerloses Transportsystem, ein Automobil, insbesondere ein Personenkraftwagen oder ein Fluggerät, wie beispielsweise ein Flugzeug, darstellen.

Im gezeigten Grundmodell GM der FIG 2 ist die Szenerie beziehungsweise die Umgebung SZ weiter aufgeteilt in eine Basisstruktur BS in eine befahrbare Fläche beziehungsweise Gleisstruktur GS sowie eine Spezialstruktur SS. Die Umweltdaten UD können sich zusammensetzen aus einer Beleuchtung BL sowie dem Wetter WE. Das wenigstens eine dynamische Element DE umschreiben insbesondere Personen PE. Dabei setzen sich die Personen PE beispielsweise aus den beiden Attributwerten a Kindern und Erwachsenen zusammen.

Die Beleuchtung BL umfasst beispielsweise eine Tageslichtbeleuchtung sowie einen unbewölkten Himmel als jeweiliges Attribut beziehungsweise Attributwert a. Das Wetter WE kann beispielsweise als jeweiligen Attributwert a eine Außentemperatur, eine Windstärke, einen Regenfall und/oder einen Schneefall umfassen. Die Gleisstruktur GS beschreibt beispielsweise eine Geometrie oder besondere Gleisausbildungen, wie beispielsweise Weichen als jeweiligen Attributwert a. Die Basisstruktur BS beschreibt beispielsweise Gebäude und/oder Vegetationen als Attributwerte. Bei den Spezialstrukturen SS kann es sich beispielsweise um Brücken, Stellwerte oder dergleichen handeln, welche jeweils als Attributwert in dem Grundmodell GM abgelegt werden.

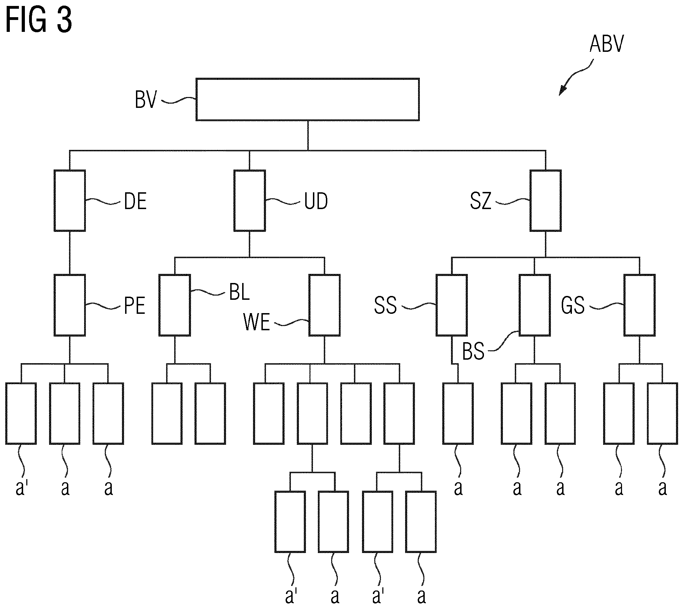

Der Ergänzungsdatensatz, dessen wenigstens eine weitere Attributwert a' in dem erweiterten Modell in FIG 3 eingeflossen ist, beschreibt beispielsweise eine Unfallstatistik betreffend den Fahrzeugtyp des Fahrzeugs, und somit beispielsweise eine offizielle von der ERA geführte Statistik namens ERADIS, welche Eisenbahnunfälle beschreibt, so handelt es sich bei dem wenigstens einen weiteren Attributwert a um einen Wert, welcher als Ausnahmesituation einen Unfall charakterisiert.

Das Verfahren zum Bereitstellen der angepassten ODD beziehungsweise der Betriebsrahmenvorgabe ABV kann insbesondere um einen weiteren, nicht in FIG 1 gezeigten Schritt, ergänzt werden, bei dem ein Testszenario für das Fahrzeug anhand der angepassten Betriebsrahmenvorgabe ABV abzuleiten und/oder das Fahrzeug beziehungsweise das zumindest eine Fahrerassistenzsystem des autonomen Fahrzeugs anhand beziehungsweise mit der angepassten Betriebsrahmenvorgabe ABV und/oder dem daraus ermittelten Testszenario zu betreiben ist.

Die elektronische Recheneinrichtung kann über eine Schnittstelle verfügen, um den Ergänzungsdatensatz abrufen zu können beziehungsweise kann die Schnittstelle mittels einer Kommunikationseinrichtung bereitgestellt werden. Dabei kann das Abrufen insbesondere von einer zentralen elektronischen Recheneinrichtung, welche beispielsweise eine Registerdatenbank umfasst oder aufweist oder als diese ausgebildet ist, durchgeführt werden kann. Die zentrale elektronische Recheneinrichtung kann beispielsweise durch die ERA bereitgestellt werden.

FIG 3 zeigt wenigstens ein weiterer Attributwert a`, welcher zu dem Grundmodell GM ergänzt beziehungsweise hinzugefügt wird. Dazu werden beispielsweise von der zentralen elektronischen Recheneinrichtung Unfalldaten abgerufen und relevante Daten in Bezug auf einen entsprechenden Zugabschnitt, auf dem das autonome Fahrzeug beziehungsweise der führerlose Zug fahren soll, dem Grundmodell GM hinzugefügt.

Auf Grundlage der Unfalldaten können Informationen über den Streckenabschnitt, auf dem sich der Unfall ereignet hat, das Datum und die Uhrzeit des Unfalls und damit Informationen über die Beleuchtung zu diesem Zeitpunkt, die an dem Unfall beteiligten Personen und Züge, sowie über historische Wetterdaten auch Informationen über das Wetter zum Zeitpunkt des Unfalls gewonnen werden. Diese Daten können beispielsweise aus den verfügbaren, insbesondere computerlesbaren, Informationen abgeleitet werden, sodass beispielsweise der wenigstens einen weiteren Attributwert aus den Ergänzungsdaten beispielsweise mittels eine Methode des maschinellen Lernens extrahiert werden kann. Solch eine Methode kann insbesondere ein Large Language-Modell beziehungsweise ein erzeugendes generisches Netzwerk (GAN) sein. Die Methode des maschinellen Lernens kann ferner zum Ableiten des wenigstens einen Punktwerts verwendet werden, wenn entsprechende Daten beziehungsweise der wenigstens eine weitere Attributwert a' aus der verfügbaren Information extrahiert sind beziehungsweise mit einem entsprechenden Format in dem Ergänzungsdatensatz hinterlegt sind.

Beispielsweise umfassen die Daten des Datensatzes die genauen Positionen, das genaue Datum, zusätzliche betroffene Personen, wie Arbeiter, und dass es sich bei dem Wetter um Temperaturen unter 0° und leichten Regen gehandelt hat.

Somit umfasst das ergänzte Grundmodell - in FIG 3 zu sehen - drei neue Attributwerte a`. Zusätzlich zum wolkenlosen Himmel einen leichten Regenfall, die Arbeiter und Temperaturen unter 0°.

Andere Attribute wie beispielsweise der Ort waren bereits vorhanden. So kann generell gesagt werden, wenn ein Attribut a` nicht bereits Teil der Menge A aller Attributwerte a ist, wird es zu A hinzugefügt, was zu einer erweiterten Menge A` von Attributwerten a` führt. Dabei kann zwischen neuen Unterkategorien, wie Arbeiter, oder neuen Attributwerten für bestehende Unterkategorien, wie einem neuen Temperaturbereich für die Außentemperatur, unterschieden werden. Die ODD kann somit automatisch um Daten erweitert werden, die mit einem potenziellen Risiko für den Unfall beziehungsweise für die Ausnahmesituation einhergehen.

Anhand des in FIG 2 gezeigten, nun bereitstehenden ergänzten Modells wird im Schritt S3 für jedes der neue Attribute aus der Menge der Attribute a` des ODD-Raums ein insbesondere quantitativer Punktwert beziehungsweise ein sogenannter Risiko-Score berechnet. Dafür sollten alle Unfälle in diesem Fall beziehungsweise Ausnahmesituationen ermittelt werden, die mit einem bestimmten Attribut a' in A` in Verbindung stehen.

So kann beispielsweise eine Häufigkeit für das Auftreten eines Unfalls in Verbindung mit a` bestimmt werden. Außerdem sollte eine Schwere des Unfalls beziehungsweise die Signifikanz des Unfalls bestimmt werden, anhand der in der Eisenbahnunfalldatenbank enthaltenen Informationen, kann aus diesen ebenfalls eine quantitative Zahl abgeleitet werden.

Somit erfolgt vorteilhafterweise für das Ableiten anhand der Signifikanz eine Klassifikation für die Ausnahmesituation beziehungsweise den Unfall. Ein Beispiel für solch eine Klassifizierung kann die Unfallschwere sein. Sie umfasst beispielsweise eine qualitative Einstufung der Schwere, beispielsweise marginal oder kritisch, und eine entsprechenden quantitativen Wert. Der qualitative Wert sollte den Eisenbahnunfalldaten manuell zugewiesen werden. Der quantitative Wert kann automatisch, beispielsweise aus nachfolgender Tabelle, welche entsprechend bereitgehalten wird, ermittelt werden.

| Signifikanz | Quantitativer Wert |
|---|---|
| keine | 0 |
| marginal | 10 |
| schwer | 100 |
| kritisch | 10.000 |
| katastrophal | 10.000.000 |

Im vorliegenden Beispiel kann beispielsweise der Schweregrad als kritisch definiert werden, wenn ein Arbeiter bei dem Unfall tödlich verletzt worden ist. Daher wird für den Schweregrad und somit für die Signifikanz ein Wert von 10.000 und beispielsweise für die Häufigkeit ein Wert von 2,10^-6 Ereignissen pro Jahr festgelegt. So kann beispielsweise durch Multiplikation der Häufigkeit mit der Signifikanz der wenigstens eine Punktewert ermittelt werden, welcher sich somit im Beispiel zu 0,01 ergibt.

Mit diesem Wert wird der wenigstens eine weitere Attributwert a` annotiert. Dies wird für alle Attribute in der Menge a` durchgeführt. Ist für einen Attributwert a beziehungsweise a` kein Punktwert ermittelbar beziehungsweise kein Risikowert ermittelt, da das Attribut mit keinen vorhandenen Unfalldaten in Verbindung steht, kann der entsprechende Punktwert auf null gesetzt werden.

Insbesondere die Schritte S2 und S3 des Verfahrens können beliebig oft wiederholt werden, sodass nach jeder Iteration die ODD separat überprüft werden kann. Ferner ist die Reihenfolge der Schritte S1 im Vergleich zu S2 und S3 beliebig. So kann beispielsweise zunächst eine ODD-Beschreibung auf der Grundlage von Unfalldaten erstellt werden und anschließend wird das Grundmodell GM ergänzt.

Durch das vorgestellte Verfahren ergibt sich der Vorteil, dass auf besonders vorteilhafte Weise ein Betriebsrahmen für ein autonomes Fahrzeug vorgegeben werden kann. Dadurch ergibt sich ferner der Vorteil, dass das Verfahren besonders vorteilhaft beziehungsweise in dem für ihn vorgegebenen autonomen Betrieb sicher betrieben werden kann.

## Patentansprüche

1. Verfahren zum Bereitstellen einer Betriebsrahmenvorgabe (BV) für ein autonomes Fahrzeug mit den Schritten:
- Bereitstellen eines Grundmodells (GM), welches Attributwerte (a) aufweist, welche zumindest eine Umgebung (SZ), Umweltdaten (DU) und ein dynamisches Element (DE) umfassen und die Betriebsrahmenvorgabe (BV) charakterisieren; (S1)
- Hinzufügen von wenigstens einem weiteren Attributwert (a`) zu dem Grundmodell (GM) aus einem Ergänzungsdatensatz, welcher eine Ausnahmesituation für einen Fahrzeugtyp des Fahrzeugs beschreibt; (S2)
- Ableiten wenigstens eines Punktwerts für den wenigstens einen weiteren Attributwert (a`) und/oder für wenigstens einen der Attributwerte (a) anhand einer Häufigkeit und/oder Signifikanz in dem Ergänzungsdatensatz; (S3) und
- Bereitstellen einer anhand des wenigstens einen Punktwerts angepassten Betriebsrahmenvorgabe (ABV). (S4)

2. Verfahren nach Anspruch 1,
**dadurch gekennzeichnet, dass**
ein Abrufen des Ergänzungsdatensatzes über eine Schnittstelle von einer zentralen elektronischen Recheneinrichtung, welche insbesondere als Registerdatenbank ausgebildet ist, erfolgt.

3. Verfahren nach Anspruch 1 oder 2,
**dadurch gekennzeichnet, dass**
das Ableiten des wenigstens einen Punktwertes zusätzlich anhand eines Zeitwerts erfolgt.

4. Verfahren nach einem der vorhergehenden Ansprüche, **dadurch gekennzeichnet, dass**
für das Ableiten anhand der Signifikanz eine Klassifikation für die Ausnahmesituation erfolgt.

5. Verfahren nach einem der vorhergehenden Ansprüche,
**dadurch gekennzeichnet, dass**
für ein Extrahieren des wenigstens einen weiteren Attributs wert (a`) und/oder zum Ableiten des wenigstens einen Punktwerts eine Methode des maschinellen Lernens verwendet wird.

6. Verfahren nach einem der vorhergehenden Ansprüche,
**dadurch gekennzeichnet, dass**
der wenigstens eine weitere Attributwert (a`) die Umgebung (SZ), die Umweltdaten (UD) und/oder das dynamische Element (DE) ergänzt und/oder spezifiziert.

7. Verfahren nach einem der vorhergehenden Ansprüche,
**dadurch gekennzeichnet, dass**
ein Vorgeben eines Testszenarios für das Fahrzeug anhand der angepassten Betriebsrahmenvorgabe (ABV) und/oder ein Betreiben des Fahrzeugs anhand der angepassten Betriebsrahmenvorgabe (ABV) und/oder in dem Testszenario erfolgt.

8. Verfahren nach einem der vorhergehenden Ansprüche,
**dadurch gekennzeichnet, dass**
als der Ergänzungsdatensatz eine Unfallstatistik betreffend den Fahrzeugtyp des Fahrzeugs verwendet wird und der wenigstens eine weitere Attributwert (a`) als Ausnahmesituation einen Unfall charakterisiert.

9. Verfahren nach einem der vorhergehenden Ansprüche,
**dadurch gekennzeichnet, dass**
der Fahrzeugtyp des autonomen Fahrzeugs ein Zug, ein fahrerloses Transportfahrzeug, ein Kraftwagen oder ein Flugzeug ist.

10. Computerprogramm, welches direkt in einen Speicher einer elektronischen Recheneinrichtung ladbar ist, mit Programmmitteln, um die Schritte des Verfahrens nach einem der Ansprüche 1 bis 9 auszuführen, wenn das Computerprogramm ausgeführt wird.

11. Elektronisch lesbarer Datenträger mit darauf gespeicherten elektronisch lesbaren Steuerinformationen, welche zumindest ein Computerprogramm nach Anspruch 10 umfassen und derart ausgestaltet sind, dass sie bei Verwendung des Datenträgers in einer elektronischen Recheneinrichtung ein Verfahren nach einem der Ansprüche 1 bis 9 durchführen.
